# EUROPÄISCHE PATENTSCHRIFT

(11) **EP 0 685 371 B1**
(45) Veröffentlichungstag und Bekanntmachung des Hinweises auf die Patenterteilung: **30.07.1997**
(21) Anmeldenummer: 95105199.4
(22) Anmeldetag: 06.04.1995
(51) Int. Cl.: B60R 22/18

(54) **Pyrotechnischer Gurtstraffer**
Pyrotechnic pretensioning device for a safety belt
Prétendeur pyrotechnique pour ceinture

(30) Priorität: 01.06.1994 DE 9408983 U
(43) Veröffentlichungstag der Anmeldung: 06.12.1995
(73) Patentinhaber: HS Technik und Design Technische Entwicklungen GmbH, 82234 Wessling (DE)
(72) Erfinder: Specht, Martin, Dipl.-Ing.(FH), D-82340 Feldafing (DE)
(74) Vertreter: Nöth, Heinz, Dipl.-Phys.

(56) Entgegenhaltungen:
- DE-A- 4 013 046
- DE-U- 8 502 536
- US-A- 5 211 423

## Beschreibung

Die Erfindung betrifft einen pyrotechnischen Gurtstraffer mit den Merkmalen des Oberbegriffs des Anspruchs 1. Ein solcher Gurtstraffer ist aus der DE-U-8502 536 bekannt.

Pyrotechnische Gurtstraffer werden eingesetzt, um im Falle einer Kollision oder eines starken Bremsvorganges eines Fahrzeuges, d. h. wenn der Sicherheitsgurt als Schutzeinrichtung zum Einsatz kommen soll, einen an einer zu sichernden Person nur locker anliegenden Sicherheitsgurt in kürzester Zeit anzuspannen oder zu straffen. Dadurch soll auch der Schlupf bzw. die Gurtlose des aufgerollten Sicherheitsgurtes beseitigt werden. Zu diesem Zweck kann der pyrotechnische Gurtstraffer an der Gurtwickelrolle angreifen oder er kann auf das im Bereich des Sitzes angeordnete Gurtschloß wirken, indem er durch Auslösen einer pyrotechnischen Treibladung das Gurtschloß um eine zum Straffen des Gurtes nötige Wegstrecke verlagert. In diesem Fall wirkt die Treibladung auf ein in einem Bremsrohr linear bewegbares und abbremsbares Antriebsteil. Aufgrund der erforderlichen Länge des Bremsrohres ist diese am Fahrzeugboden in etwa horizontal, beispielsweise in Fahrzeuglängsrichtung angebracht. Da das Gurtschloß von seinem Befestigungspunkt aus schräg nach oben gerichtet ist, muß die Bewegung des Antriebsteils auf das Gurtschloß durch Umlenkung übertragen werden. Diese Übertragung erfolgt üblicherweise mittels eines Zugseils, das das Antriebsteil mit dem Gurtschloß verbindet und um eine Seilumlenkung geführt ist.

Aus der US-PS 4 242 945 ist ebenfalls eine zur Gurtstraffung verwendbare Einrichtung bekannt, die ein in einer zylindrischen Führung verschiebbar aufgenommenes Antriebsteil enthält, auf das eine pyrotechnische Treibladung wirken kann. Das Antriebsteil ist mit einem Zugseil verbunden, das durch eine Öffnung in einem auf die zylindrische Führung aufschraubbaren Verschlußdeckel herausgeführt ist. Außerhalb der zylindrischen Führung ist das Zugseil um eine separat gelagerte Seilrolle umgelenkt. Das Zugseil ist dann mit einem Gurtschloß verbunden, das wiederum eine separate, fahrzeugseitige Befestigung erfordert. Durch die erforderliche Lagerung und Befestigung der einzelnen Teile des Gurtstraffers ist jedoch seine Herstellung und Montage zeit- und somit kostenaufwendig.

Der vorliegenden Erfindung liegt die Aufgabe zugrunde, einen pyrotechnischen Gurtstraffer der eingangs genannten Art zu schaffen, der einfacher aufgebaut ist und mit verringertem Montageaufwand in einem Fahrzeug anzubringen ist.

Diese Aufgabe wird durch einen pyrotechnischen Gurtstraffer mit den Merkmalen des Anspruchs 1 gelöst. Vorteilhafte Ausgestaltungen sind in den Unteransprüchen angegeben.

Das Trägerelement vereint die bisher in getrennten Bauteilen mit eigenen Lagerungen und Befestigungen vorhandenen Gurtstrafferelemente in sich, so daß sich der Herstellungs- und Montageaufwand erheblich verringert. Der Gasgenerator und die Zugseilumlenkung sind geschützt in dem Trägerelement untergebracht. Die beiden Formteilhälften enthalten jeweils halbseitig die Ausnehmungen für den Gasgenerator, die Zugseilführung, den Gasdruckraum und der weiteren Elemente. Vorzugsweise ist die Zugseilumlenkung einstückig in einer der Formteilhälften ausgebildet, um eine glatte, nicht von einer Trennfuge unterbrochene Führungsfläche für die Seilumlenkung zu erhalten.

Die Erfindung wird nachfolgend anhand eines Ausführungsbeispiels unter Bezugnahme auf Zeichnungen näher erläutert. Es zeigt:

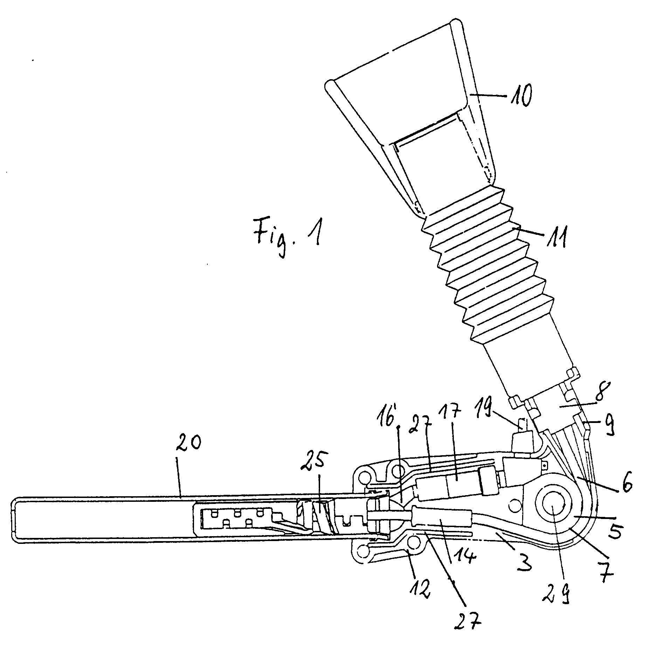

- Fig. 1:: in Seitenansicht und teilweise aufgeschnitten einen erfindungsgemäßen pyrotechnischen Gurtstraffer mit einem Gurtschloß; und

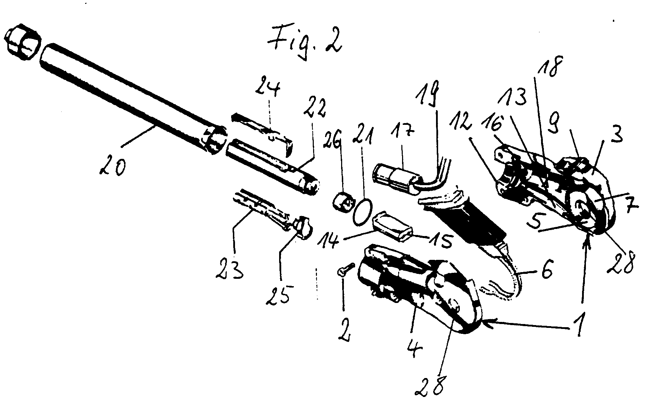

- Fig. 2:: in Explosionsdarstellung den pyrotechnischen Gurtstraffer.

Der erfindungsgemäße pyrotechnische Gurtstraffer weist ein Trägerelement 1 auf, das aus zwei z. B. durch Schrauben 2 lösbar zu verbindenden Halbschalen oder Formteilhälften 3, 4 besteht. In der einen Formteilhälfte 3 ist eine Zugseilumlenkung 5 integral ausgebildet, um die ein doppeltes Zugseil 6 gelegt ist. Die Zugseilumlenkung 5 besitzt eine zylindrische Mantelfläche 7. Das Zugseil 6 ist einerseits an einer Auslöseanzeige 8 vorbeigeführt, die an einem oberen Anschlußstück 9 des Trägerelements 1 befestigt ist. An diesem Anschlußstück 9 ist ein Gurtschloß 10 derart verschiebbar gelagert, daß es durch die Zugkraft des Zugseils 6 in Richtung auf das Anschlußstück 9 des Trägerelements 1 verlagert werden kann. Ein Faltenbalg 11 deckt diese Führung ab, in der das Zugseil 6 verläuft.

Das um die Zugseilumlenkung 5 gelegte Zugseil 6 verläuft andererseits in Richtung auf ein zweites Anschlußstück 12 in einer Führungsnut 13, die zur Aufnahme eines Dichtelementes 14, das zwei Bohrungen 15 zum druckdichten Hindurchführen des doppelten Zugseils 6 aufweist, erweitert ist. Im Trägerelement 1 ist vor dem zweiten Anschlußstück 12 ein Druckraum 16 ausgebildet, der das durch einen Gasgenerator 17 erzeugte Druckgas aufnimmt. Der Gasgenerator 17 ist in einer im Trägerelement 1 ausgebildeten Vertiefung 18 fest aufgenommen. Seine Zündleitung 19 ist durch eine Öffnung nach außen geführt.

Am zweiten Anschlußstück 12 ist ein Führungs- und Bremsrohr 20 derart angebracht, daß es in einem Aufnahmeabschnitt des Trägerelements 1, der sich einwärts erweitert, mit seiner an diesen Abschnitt angepaßten Form fest aufgenommen ist. Das Führungs- und Bremsrohr 20 ist gegenüber der Umgebung mit einem O-Ring 21 druckdicht abgedichtet. In dem Rohr 20 ist ein zylindrisches Antriebsteil in Form eines Kolbens 22 längsverschiebbar aufgenommen, auf den die Druckkraft des vom Gasgenerator 17 nach seiner Zündung erzeugten Druckgases einwirkt und den Kolben zum Gurtstraffen im Rohr 20 nach vorne bewegt. In dem Kolben 22 ist ein Seilanker 23 zum kolbenseitigen Festlegen des Zugseils 6 aufgenommen. Der Kolben 22 enthält eine Sicherungsfeder 24, um eine Rastellipse 25, die, wie z.B. aus der EP 0 398 010 A1 bekannt ist, die Funktion einer Rücklaufbremse nach einer durch das Druckgas bewirkten Kolbenbewegung erfüllt, in Bereitschafts- oder Normalstellung zu halten. Ein Dichtring 26 sitzt an der Druckfläche des Kolbens 22, um diesen druckdicht gegen das Rohr 20 abzudichten.

Die beiden Formteilhälften 3, 4 weisen jeweils Führungen 27 auf, um ihren paßgenauen Zusammenbau zu erleichtern. Diese Führungen 27 sind im dem Ausführungsbeispiel als längliche Vertiefungen (beispielsweise als längliche Nuten) in der einen Formteilhälfte 3 und als entsprechende Vorsprünge in der anderen Formteilhälfte 4 ausgebildet, können aber auch anders geformte Führungsteile oder dergleichen aufweisen.

Die Formteilhälften 3, 4 sind im Bereich des Druckraumes 16 paßgenau hergestellt, um den Druckraum 16 auch an der Trennfläche der Formteilhälften 3, 4 druckdicht abzudichten. Jedoch kann auch zusätzlich eine zumindest den Druckraum 16 umfassende Dichtung eingelegt werden.

Zum Befestigen des Gurtstraffers am Fahrzeug ist eine Öffnung 28 vorgesehen, die durch die beiden Formteilhälften 3, 4 führt und die Aufnahme einer Zylinderschraube 29 ermöglicht. Diese zylindrische Öffnung 28 ist nahe der Seilumlenkung 5, vorzugsweise in der Mitte der kreisbogenförmigen Seilumlenkung 5 angebracht, um die beim Gurtstraffen erzeugten Kräfte direkt über die Gurtstrafferbefestigung aufzunehmen.

Dadurch werden Biegemomente in den Formteilhälften 3, 4 gering gehalten.

Die Formteilhälften 3, 4 können aus Metall hergestellt sein, wobei die Ausnehmungen für die einzelnen Elemente durch Formfräsen hergestellt werden können. Als weitere Herstellungsmöglichkeiten bieten sich Spritzguß mit Leichtmetall an. Im Ausführungsbeispiel sind die Formteilhälften 3, 4 aus einem schlagzähen Kunststoff hergestellt.

## Patentansprüche

1. Pyrotechnischer Gurtstraffer
mit einem Trägerelement (1), an dem eine Führung (20)
mit einem darin verschiebbar aufgenommenen Antriebsteil (22) zum Bewegen eines Zugseils (6) angeschlossen ist und das eine Zugseilumlenkung (5) aufweist,
mit einem mit dem Zugseil (6) verbundenen Gurtschloß (10) und
mit einem Gasgenerator (17),
**dadurch gekennzeichnet,**
daß das Trägerelement (1) aus zwei Formteilhälften (3, 4) gebildet ist und die zugseilumlenkung (5) sowie Anschlußstücke (9, 12) zum Anbringen der Führung (20) für das Antriebsteil (22) bzw. des Gurtschlosses (10) und den Gasgenerator (17) integriert enthält.

2. Pyrotechnischer Gurtstraffer nach Anspruch 1, dadurch gekennzeichnet, daß die Zugseilumlenkung (5) einstückig in einer der Formteilhälften (3, 4) ausgebildet ist.

3. Pyrotechnischer Gurtstraffer nach Anspruch 1 oder 2, dadurch gekennzeichnet, daß die Zugseilumlenkung (5) als eine kreisbogenförmige Führungsfläche (17) ausgebildet ist.

4. Pyrotechnischer Gurtstraffer nach einem der Ansprüche 1 bis 3, dadurch gekennzeichnet, daß die Formteilhälften (3, 4) miteinander lösbar verbunden sind.

5. Pyrotechnischer Gurtstraffer nach einem der Ansprüche 1 bis 4, dadurch gekennzeichnet, daß das Trägerelement (1) ein Befestigungsteil (28) zum fahrzeugseitigen Festlegen des Gurtstraffers aufweist.

6. Pyrotechnischer Gurtstraffer nach Anspruch 5, dadurch gekennzeichnet, daß das Befestigungsteil (28) nahe der Zugseilumlenkung (5) angeordnet ist.

7. Pyrotechnischer Gurtstraffer nach Anspruch 5 oder 6, dadurch gekennzeichnet, daß das Befestigungsteil (28) im Mittelpunkt der Zugseilumlenkung (5) angeordnet ist.

8. Pyrotechnischer Gurtstraffer nach einem der Ansprüche 5 bis 7, dadurch gekennzeichnet, daß das Befestigungsteil (28) eine Durchgangsöffnung (28) im Trägerelement (1) ist.

9. Pyrotechnischer Gurtstraffer nach einem der Ansprüche 1 bis 8, dadurch gekennzeichnet, daß jede Formteilhälfte (3, 4) Führungen (27) zum paßgenauen Zusammenfügen der Formteilhälften (3, 4) aufweist.

10. Pyrotechnischer Gurtstraffer nach einem der Ansprüche 1 bis 9, dadurch gekennzeichnet, daß das Trägerelement (1) aus schlagzähem Kunststoff hergestellt ist.

11. Pyrotechnischer Gurtstraffer nach einem der Ansprüche 1 bis 10, dadurch gekennzeichnet, daß das Trägerelement (1) ein Spritzgußteil ist.

12. Pyrotechnischer Gurtstraffer nach einem der Ansprüche 1 bis 11, dadurch gekennzeichnet, daß die beiden Formteilhälften (3, 4) zumindest im Bereich eines Gasdruckraumes (16) druckdicht verbindbar sind.

13. Pyrotechnischer Gurtstraffer nach einem der Ansprüche 1 bis 12, dadurch gekennzeichnet, daß die beiden Formteilhälften (3, 4) ein kompaktes Gehäuse bilden, in dem alle Bauteile geschützt umschlossen sind.

## Claims

1. A pyrotechnic belt tensioner comprising:
a carrier element (1) to which a guide (20) with a drive member (22) slidably accommodated therein for moving a tension cable (6) is connected and which has a tension cable deflection means (5),
a belt lock (10) connected to the tension cable (6), and
a gas generator (17),
characterised in that
the carrier element (1) is formed from two moulding halves (3, 4) and integratedly includes the tension cable deflection means (5) as well as connecting portions (9, 12) for mounting of the guide (20) for the drive member (22) and of the belt lock (10) respectively, and the gas generator (17).

2. A pyrotechnic belt tensioner according to claim 1 characterised in that the tension cable deflection means (5) is formed integrally in one of the moulding halves (3, 4).

3. A pyrotechnic belt tensioner according to claim 1 or claim 2 characterised in that the tension cable deflection means (5) is in the form of an arcuate guide surface (17).

4. A pyrotechnic belt tensioner according to one of claims 1 to 3 characterised in that the moulding halves (3, 4) are releasably connected together.

5. A pyrotechnic belt tensioner according to one of claims 1 to 4 characterised in that the carrier element (1) has a fixing portion (28) for securing the belt tensioner at the vehicle side.

6. A pyrotechnic belt tensioner according to claim 5 characterised in that the fixing portion (28) is arranged near the tension cable deflection means (5).

7. A pyrotechnic belt tensioner according to claim 5 or claim 6 characterised in that the fixing portion (28) is arranged at the centre point of the tension cable deflection means (5).

8. A pyrotechnic belt tensioner according to one of claims 5 to 7 characterised in that the fixing portion (28) is a through opening (28) in the carrier element (1).

9. A pyrotechnic belt tensioner according to one of claims 1 to 8 characterised in that each moulding half (3, 4) has guides (27) for assembly of the moulding halves (3, 4) with an accurate fit.

10. A pyrotechnic belt tensioner according to one of claims 1 to 9 characterised in that the carrier element (1) is made from impact-resistant plastics material.

11. A pyrotechnic belt tensioner according to one of claims 1 to 10 characterised in that the carrier element (1) is an injection moulding.

12. A pyrotechnic belt tensioner according to one of claims 1 to 11 characterised in that the two moulding halves (3, 4) can be pressure-tightly connected at least in the region of a gas pressure space (16).

13. A pyrotechnic belt tensioner according to one of claims 1 to 12 characterised in that the two moulding halves (3, 4) form a compact casing in which all components are enclosed in a protected fashion.

## Revendications

1. Enrouleur-dérouleur pyrotechnique pour une ceinture de sécurité, avec un élément support (1), auquel est relié un guidage (20) avec un élément d'entraïnement (22), logé et mobile dans ce dernier, pour le déplacement d'un câble de traction (6), et qui présente un renvoi de câble de traction (5), avec un verrouilleur de ceinture (10) relié au câble de traction (6), et avec un générateur de gaz (17), caractérisé en ce que l'élément support (1) est formé de deux moitiés de préformés (3, 4) et intègre le renvoi du câble de traction (5), des raccords (9, 12) pour le montage du guidage (20), prévu pour l'élément d'entraïnement (22), et/ou du verrouilleur (10) de ceinture, ainsi que le générateur de gaz (17).

2. Enrouleur-dérouleur pyrotechnique pour une ceinture de sécurité suivant la revendication 1, caractérisé en ce que le renvoi de câble de traction (5) est réalisé d'une seule pièce dans l'une des moitiés de préformés (3, 4).

3. Enrouleur-dérouleur pyrotechnique pour une ceinture de sécurité suivant l'une des revendications 1 et 2, caractérisé en ce que le renvoi de câble de traction (5) est réalisé sous forme de surface de guidage (17) en arc de cercle.

4. Enrouleur-dérouleur pyrotechnique pour une ceinture de sécurité suivant l'une des revendications 1 à 3, caractérisé en ce que les moitiés de préformés (3, 4) sont assemblées entre elles d'une manière amovible.

5. Enrouleur-dérouleur pyrotechnique pour une ceinture de sécurité suivant l'une des revendications 1 à 4, caractérisé en ce que l'élément support (1) présente un élément de fixation (28) pour la fixation côté véhicule du rétracteur de ceinture.

6. Enrouleur-dérouleur pyrotechnique pour une ceinture de sécurité suivant la revendication 5, caractérisé en ce que L'élément de fixation (28) est disposé au voisinage du renvoi du câble de traction (5).

7. Enrouleur-dérouleur pyrotechnique pour une ceinture de sécurité suivant l'une des revendications 5 et 6, caractérisé en ce que L'élément de fixation (28) est disposé au centre du renvoi du câble de traction (5).

8. Enrouleur-dérouleur pyrotechnique pour une ceinture de sécurité suivant l'une des revendications 5 à 7, caractérisé en ce que l'élément de fixation (28) est une ouverture de passage (28) pratiquée dans l'élément support (1).

9. Enrouleur-dérouleur pyrotechnique pour une ceinture de sécurité suivant l'une des revendications 1 à 8, caractérisé en ce que chaque moitié de préformés (3, 4) présente des guidages (27) pour l'assemblage avec un ajustement exact de ces moitiés (3, 4).

10. Enrouleur-dérouleur pyrotechnique pour une ceinture de sécurité suivant l'une des revendications 1 à 9, caractérisé en ce que L'élément support (1) se compose d'une matière plastique résiliente.

11. Enrouleur-dérouleur pyrotechnique pour une ceinture de sécurité suivant l'une des revendications 1 à 10, caractérisé en ce que l'élément support (1) est une pièce moulée par injection.

12. Enrouleur-dérouleur pyrotechnique pour une ceinture de sécurité suivant l'une des revendications 1 à 11, caractérisé en ce que les deux moitiés de préformés (3, 4) peuvent être assemblées de manière étanche en pression, au moins dans la zone d'un compartiment de pression de gaz (16).

13. Enrouleur-dérouleur pyrotechnique pour une ceinture de sécurité suivant l'une des revendications 1 à 12, caractérisé en ce que les deux moitiés de préformés (3, 4) forment un carter compact, dans lequel sont enfermés et protégés tous les composants.
